# EUROPÄISCHE PATENTANMELDUNG

(11) **EP 1 763 980 A1**
(43) Veröffentlichungstag der Anmeldung: **21.03.2007**
(21) Anmeldenummer: 06018908.1
(22) Anmeldetag: 09.09.2006
(51) Int. Cl.: A01B 33/08, A01B 73/04

(54) **Antriebsvorrichtung für ein landwirtschaftliches Gerät**

(30) Priorität: 16.09.2005 DE 102005044374
(71) Anmelder: Amazonen-Werke H. Dreyer GmbH & Co. KG, 49205 Hasbergen (DE)
(72) Erfinder: Gieseke, Reinhard, 27798 Hude (DE); Tiessen, Reimer Uwe, 26135 Oldenburg (DE)

(57) **Zusammenfassung**

Antriebsvorrichtung für ein landwirtschaftliches Gerät, welches ein zentrales Kuppelteil mit einem Zentralgetriebe (2), welches eine Eingangswelle (10) und zwei seitliche Ausgangswellen (11) aufweist, und zwei an dem Kuppelteil seitlich einschwenkbar angeordneten und jeweils ein Getriebe mit einer Eingangswelle (13) aufweisenden Geräteabschnitte (5,6) aufweist, wobei die jeweilige Ausgangswelle (11) über Kreuzgelenke aufweisende Verbindungswellen mit der jeweiligen Eingangswelle (13) des Geräteabschnittes (5,6) kraftflüssig verbunden ist. Um den Antrieb bzgl. der Krafteinleitung in die Antriebe der Geräteabschnitte (5,6) wesentlich zu vereinfachen, ist vorgesehen, dass die Eingangswelle (13) und die zugehörige Ausgangswelle (11) in ausgeklappter Position der Geräteabschnitte (5,6) fluchtend zueinander angeordnet sind, dass die Eingangswelle (13) abtriebsseitig ein drehfest angeordnetes Kegelrad (14) aufweist, dass das Kegelrad (14) mit einem Kegelrad (15) des Antriebes des Geräteabschnittes (5,6) in Antriebsverbindung steht.

## Beschreibung

Die Erfindung betrifft eine Antriebsvorrichtung für ein landwirtschaftliches Gerät gemäß des Oberbegriffes des Patentanspruches 1.

Eine derartige Antriebsvorrichtung ist beispielsweise durch die DE 199 43 208 C2 bekannt.

Diese Antriebsvorrichtung weist ein Zentralgetriebe mit zwei seitlich angeordneten Ausgangswellen auf. Auf diesen Ausgangswellen sind jeweils sich nach außen erstreckende Gelenkwellen drehfest angeordnet welche mit den Eingangswellen der Eingangsgetriebe der einklappbaren Geräteabschnitte drehfest verbunden sind. Die Gelenkwelle weist jeweils im Bereich der Ausgangswelle des Zentralgetriebes und der Eingangswelle der Eingangsgetriebe der Geräteabschnitte Kreuzgelenke auf. Die Schwenkachse, um die die Geräteabschnitte einklappbar sind, fällt nicht mit der Zapfenachse der Kreuzgelenke der Gelenkwelle zusammen. Es ist dieser Druckschrift nicht zu entnehmen, ob die Eingangswelle des Eingangsgetriebes des Geräteabschnittes und die Ausgangswelle des Zentralgetriebes in ausgeklappter Position der Geräteabschnitte miteinander fluchten.

Der Erfindung liegt die Aufgabe zugrunde, den Antrieb bzgl. der Krafteinleitung in die Antriebe der Geräteabschnitte wesentlich zu vereinfachen.

Diese Aufgabe wird erfindungsgemäß durch die kennzeichnenden Merkmale des Patentanspruches 1 gelöst. Infolge dieser Maßnahmen wird über die Eingangswelle des Geräteabschnittes die Kraft direkt ohne Umweg und ohne ein aufwendiges Eingangsgetriebe des Geräteabschnittes direkt in den Antrieb des Geräteabschnittes eingeleitet.

Dadurch dass die Eingangswelle mit der Antriebswelle des Antriebes des Geräteabschnittes einen Winkel von größer als 90° einschließt, können in einfacher Weise Höhenunterschiede zwischen der Ausgangswelle des Zentralgetriebes und der Eingangswelle des Geräteabschnittes überwunden werden. Um bei landwirtschaftlichen Geräten, wobei die Geräteabschnitte mittels Schwenkgelenke, deren Schwenkachsen in Fahrtrichtung weisen, an dem Kuppelteil angelenkt sind, eine Längenänderung der Verbindungswellen zu vermeiden, ist vorgesehen, dass die Zapfenachsen des jeweiligen Kreuzgelenkes der von der Eingangswelle und der Ausgangswelle gebildeten Verbindungswellen mit der Schwenkachse des Schwenkgelenkes zusammenfallen.

Höhenunterschiede zwischen der Ausgangswelle des Zentralgetriebes und der Eingangswelle des Geräteabschnittes lassen sich durch die Verbindungswelle in einfacher Weise dadurch überbrücken, dass die von der Eingangswelle und der Ausgangswelle gebildeten Verbindungswellen von dem Zentralgetriebe in Richtung der Geräteabschnitte schräg von oben nach unten verlaufen. In vorteilhafter Weise ist sowohl die Eingangswelle des Geräteabschnittes wie die Ausgangswelle des Zentralgetriebes in gleicher Flucht wie die Verbindungswelle angeordnet.

Weitere Einzelheiten der Erfindung sind der Beispielsbeschreibung und den Zeichnungen zu entnehmen. Hierbei zeigen
- Fig. 1: das landwirtschaftliche Gerät in ausgeklappter Position in Prinzipdarstellung und in der Ansicht von vorne und
- Fig. 2: den Antrieb des Geräteabschnittes in vergrößerter Darstellung, in Teilansicht und in Prinzipdarstellung in der Ansicht von vorne.

Das landwirtschaftliche Gerät ist als Kreiselegge ausgebildet und weist ein zentrales Kuppelteil 1 mit dem Zentralgetriebe 2 auf. An dem zentralen Kuppelteil 1 ist eine nicht dargestellte Dreipunktanbauvorrichtung zum Anbau des Gerätes an den Dreipunktkraftheber eines Ackerschleppers angeordnet. An dem Kuppelteil 1 sind über die Schwenkgelenke 3, deren Schwenkachsen 4 in Fahrtrichtung weisen seitlich jeweils ein Geräteabschnitt 5, 6 angeordnet. In dem Kastenbalken 7 jedes Geräteabschnittes 5, 6 sind die einzelnen Werkzeugkreisel 8 drehbar gelagert und werden über die miteinander kämmenden Stirnräder 9 angetrieben.

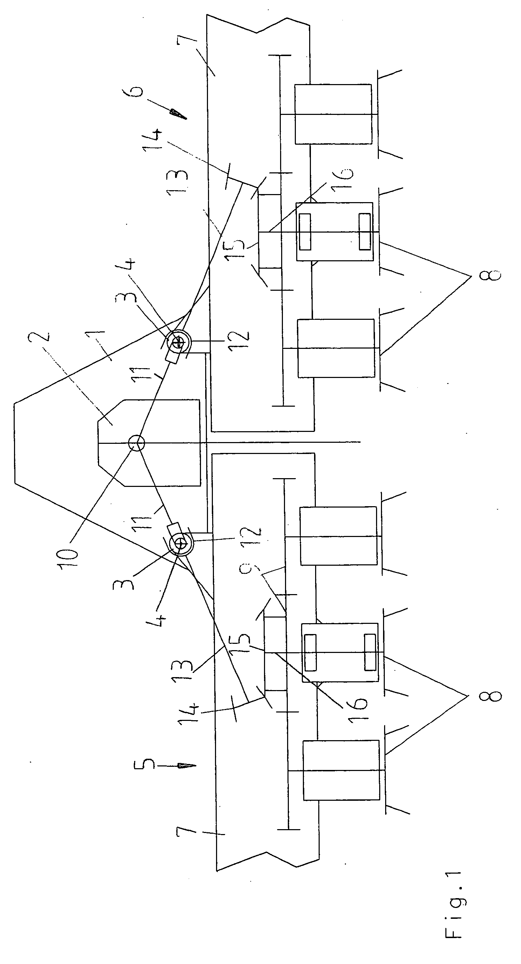

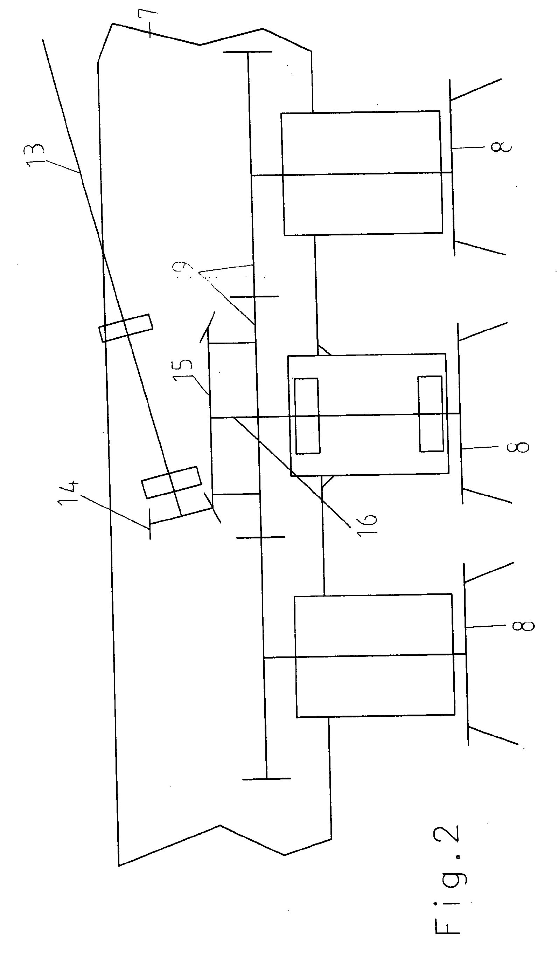

Das Zentralgetriebe 2 weist die Eingangswelle 10 auf, die über eine Gelenkwelle mit der Zapfwelle des Schleppers gekuppelt wird. Weiterhin weist das Zentralgetriebe 2 seitlich nach außen herausgeführte Ausgangswellen 11 auf. Die Ausgangswellen 11 sind im Bereich des Schwenkgelenkes 3 mittels Kreuzgelenken 12 jeweils mit den Eingangswellen 13 des jeweiligen Geräteabschnittes 5, 6 kraftschlüssig verbunden. Jede Eingangswelle 13 jedes Geräteabschnittes 5, 6 weist ein abtriebsseitig angeordnetes Kegelrad 14 auf. Das Kegelrad 14 steht mit einem Kegelrad 15 des Stirnradantriebes 9 des jeweiligen Geräteabschnittes 5, 6 in Antriebsverbindung. Die Eingangswelle 13 des Geräteabschnittes 5, 6 und die dazugehörige Ausgangswelle 11 des Zentralgetriebes 2 sind in ausgeklappter Position der Geräteabschnitte 5, 6 fluchtend zueinander angeordnet, wie Fig. 1 zeigt. Die Eingangswelle 13 des Geräteabschnittes 5, 6 schließt mit der Antriebswelle 16 des Antriebes 9 des Geräteabschnittes 5, 6 einen Winkel von größer als 90° ein, wie Fig. 1 und 2 zeigen. Die Zapfenachse des Kreuzgelenkes 12 der jeweiligen von der Eingangswelle 13 und der Ausgangswelle 11 gebildeten Verbindungswellen fallen mit der Schwenkachse 4 des jeweiligen Schwenkgelenkes 3 zusammen. Die Wellen 12, 13 verlaufen von dem Zentralgetriebe 2 in Richtung des jeweiligen Geräteabschnittes 5, 6 schräg von oben nach unten. Hierdurch wird der Höhenunterschied zwischen der Ausgangswelle 11 des Zentralgetriebes 2 und der Eingangswelle 13 des Geräteabschnittes 4, 5 in einfacher Weise überbrückt.

## Patentansprüche

1. Antriebsvorrichtung für ein landwirtschaftliches Gerät, welches ein zentrales Kuppelteil mit einem Zentralgetriebe, welches eine Eingangswelle und zwei seitliche Ausgangswellen aufweist, und zwei an dem Kuppelteil seitlich einschwenkbar angeordneten und jeweils ein Getriebe mit einer Eingangswelle aufweisenden Geräteabschnitte aufweist, wobei die jeweilige Ausgangswelle über Kreuzgelenke aufweisende Verbindungswellen mit der jeweiligen Eingangswelle des Geräteabschnittes kraftflüssig verbunden ist, **dadurch gekennzeichnet, dass** die Eingangswelle (13) und die zugehörige Ausgangswelle (11) in ausgeklappter Position der Geräteabschnitte (5,6) fluchtend zueinander angeordnet sind, dass die Eingangswelle (13) abtriebsseitig ein drehfest angeordnetes Kegelrad (14) aufweist, dass das Kegelrad (14) mit einem Kegelrad (15) des Antriebes (9) des Geräteabschnittes (5,6) in Antriebsverbindung steht.

2. Antriebsvorrichtung nach Anspruch 1, **dadurch gekennzeichnet, dass** die Eingangswelle (13) mit der Antriebswelle (16) des Antriebes (9) des Geräteabschnittes (5,6) einen Winkel von größer als 90° einschließt.

3. Antriebsverbindung nach Anspruch 1, wobei die Geräteabschnitte mittels Schwenkgelenke (3) deren Schwenkachsen (4) in Fahrtrichtung weisen, an dem Kuppelteil angelenkt sind, **dadurch gekennzeichnet, dass** die Zapfenachsen des Kreuzgelenkes (12) der Verbindungswellen (11,13) mit der Schwenkachse (4) des Schwenkgelenkes (3) zusammenfallen.

4. Antriebsvorrichtung nach Anspruch 1, **dadurch gekennzeichnet, dass** die Verbindungswellen (11,13) von dem Zentralgetriebe (2) in Richtung der Geräteabschnitte (4, 5) schräg von oben nach unten verlaufen.
